(19) Europäisches Patentamt / European Patent Office / Office européen des brevets

(11) EP 2 864 425 B1

(12) **FASCICULE DE BREVET EUROPEEN**

(45) Date de publication et mention de la délivrance du brevet:
**30.05.2018 Bulletin 2018/22**

(21) Numéro de dépôt: **13729780.0**

(22) Date de dépôt: **20.06.2013**

(51) Int Cl.:
***C09C 1/44*** (2006.01) ***C09C 1/46*** (2006.01)
***C09C 1/56*** (2006.01) ***C08K 3/04*** (2006.01)
***C08K 9/02*** (2006.01)

(86) Numéro de dépôt international:
**PCT/EP2013/062932**

(87) Numéro de publication internationale:
**WO 2013/190063 (27.12.2013 Gazette 2013/52)**

(54) **PROCÉDÉ DE PRÉPARATION D'UNE ESPÈCE CARBONNÉE RECOUVERTE DE SILICE**

VERFAHREN ZUR HERSTELLUNG EINER SILICABESCHICHTETEN SPEZIES AUF KOHLENSTOFFBASIS

PROCESS FOR PREPARING A SILICA-COVERED CARBON-BASED SPECIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2012 FR 1255868**

(43) Date de publication de la demande:
**29.04.2015 Bulletin 2015/18**

(73) Titulaire: **Compagnie Générale des Etablissements Michelin**
**63000 Clermont-Ferrand (FR)**

(72) Inventeurs:
- **MAILLET, Emilie**
  **F-63040 Clermont-Ferrand Cedex 09 (FR)**
- **GUZMAN, Guillaume**
  **F-63040 Clermont-Ferrand Cedex 09 (FR)**
- **BERRIOT, Julien**
  **F-63040 Clermont-Ferrand Cedex 09 (FR)**

(74) Mandataire: **Bocchi, Brigitte**
**Manufacture Française des Pneumatiques Michelin**
**CBS/CORP/J/PI - F35 - Ladoux**
**23, place des Carmes - Déchaux**
**63040 Clermont-Ferrand Cedex 9 (FR)**

(56) Documents cités:
**EP-A1- 0 799 854** **WO-A1-00/05312**
**WO-A1-98/13428**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 864 425 B1

## Description

La présente invention se rapporte à un procédé de préparation d'une espèce carbonée recouverte partiellement ou totalement de silice.

Les espèces carbonées, en particulier le noir de carbone, et la silice sont des charges renforçantes bien connues utilisées généralement pour le renforcement des compositions pneumatiques à base d'élastomères diéniques.

Dans le domaine de la fabrication des pneumatiques et en particulier de la formulation des compositions caoutchouteuses en contact avec le sol, appelées bandes de roulement, on cherche généralement à trouver le meilleur compromis possible entre des performances antagonistes telles que le comportement du véhicule, la résistance au roulement, l'adhérence sur sols sec et humide et l'usure.

Le noir de carbone est connu pour sa grande aptitude au renforcement dans les mélanges de caoutchouc, la silice permettant quant à elle d'obtenir des propriétés hystérétiques améliorées c'est-à-dire une hystérèse réduite des compositions de caoutchouc. Il existe donc un besoin de disposer d'une charge apportant le niveau d'hystérèse de la silice et le caractère renforçant d'un noir de carbone dans des compositions de caoutchouc.

C'est pourquoi certains documents, tels que les publications WO98/13428 et EP 711 805 B1, divulguent un procédé de synthèse de nouvelles charges renforçantes constituées de noir de carbone recouvert au moins partiellement de silice. EP 0 799 854 A1 divulgue un procédé de préparation des noirs de carbone recouverts de silice utilisant comme dispersant un tensioactif ou du methanol. On cherche à disposer d'un autre procédé plus économique et qui permet de mieux contrôler le dépôt de silice sur le noir de carbone. En particulier, on souhaite disposer d'un procédé qui permette de contrôler la quantité de silice déposée, et qui permette de recouvrir partiellement ou totalement l'espèce carbonée.

Les demanderesses ont découvert que ces objectifs pouvaient être atteints en utilisant un tensioactif cationique qui se dépose sur la surface de l'espèce carbonée, la silice venant se déposer sur ledit tensioactif.

L'invention a donc pour objet un procédé de préparation de noir de carbone recouvert partiellement ou totalement de silice, comprenant les étapes suivantes :

- on met en contact l'espèce carbonée dans un milieu aqueux en présence d'un ou plusieurs tensioactifs cationiques,
- on ajuste le pH du milieu réactionnel de la suspension à l'aide d'un agent alcalin jusqu'à un pH variant de 8 à 10,
- on ajoute dans le milieu réactionnel obtenu un ou plusieurs silicates alcalins, en maintenant le pH du milieu réactionnel entre 8 et 10.

La figure 1 représente de façon schématique une espèce carbonée totalement recouverte de silice.
La figure 2 représente de façon schématique une espèce carbonée partiellement recouverte de silice.
La figure 3 représente de façon schématique une autre espèce carbonée partiellement recouverte de silice.
Les figures 4 et 5 représentent les courbes de distribution de sites en énergie de silice ou de différentes espèces carbonées recouvertes ou non de silice.

Par espèce carbonée, on entend au sens de l'invention un objet particulaire ne contenant dans sa masse que des atomes de carbone, non compte-tenu des impuretés, étant entendu qu'en surface il peut y avoir d'autres atomes.

L'espèce carbonée peut être choisie, sans être exhaustif, parmi les noirs de carbone, les graphites naturels et synthétiques, les fibres de carbone, les graphènes, les fullerènes, les noirs d'acétylène et les nanotubes de carbone.

Comme noirs de carbone conviennent tous les noirs de carbone conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées 500, 600 ou 700, par exemple les noirs N550, N660, N683, N772 (grades ASTM).

Le ou les tensioactifs cationiques sont généralement choisis parmi le bromure de cétyltriméthyl ammonium, l'hexadécylamine, le monohydrate de sodium 1-pentanesulfonate, l'éthonium, la décaméthoxine, le bromure de tétradécyltriméthylammonium, le bromure de décyltriméthylammonium, le bromure de dodécyltriméthylammonium, le chlorure de cétyltriméthylammonium, l'hydroxyde de tétraméthylammonium, le bromure de dodécylpyridinium et le chlorure de cétylpyridinium.

De préférence, le tensioactif cationique est le bromure de cétyltriméthyl ammonium.

La présence de tensioactifs cationiques à la surface de l'espèce carbonée, permet une précipitation efficace de la silice sur cette surface.

En l'absence de tensioactif cationique, le rendement (taux de silice effectif/taux de silice visée) est inférieur à 10%. En présence de tensioactif cationique, la silice précipite et se dépose sur l'espèce carbonée. Le rendement est supérieur à 80% pour des quantités de tensioactif cationique supérieures ou égales à 0,1 molécule de tensioactif cationique/$nm^2$.

Cependant, la quantité de tensioactif cationique ne doit pas être trop importante. En effet, si le tensioactif cationique introduit n'est pas complètement adsorbé à la surface de l'espèce carbonée, il se forme des micelles dans le milieu, et la silice va précipiter autour de celles-ci et former de la silice co-précipitée.

La quantité de tensioactif cationique ajoutée est avantageusement telle que la densité de charges cationiques de surface spécifique BET de l'espèce carbonée varie de 0,05 à 2 charges cationiques par $nm^2$ de l'espèce carbonée.

Ainsi, le ou les tensioactifs cationiques sont présents de préférence en une quantité variant de 0,1 à 1,5, de préférence de 0,5 à 1,5 molécules de tensioactif par $nm^2$ de surface spécifique BET de l'espèce carbonée.

La mise en contact de l'espèce carbonée et du ou des tensioactifs cationiques est avantageusement réalisée sous chauffage, à une température comprise entre 70 et 90°C.

Après la mise en contact de l'espèce carbonée, le pH est ajusté à l'aide d'un agent alcalin jusqu'à un pH variant de 8 à 10, de préférence de 8,5 à 9,5. Le pH est généralement ajusté au moyen d'un hydroxyde alcalin, par exemple l'hydroxyde de sodium.

Comme expliqué précédemment, la troisième étape du procédé selon l'invention consiste à faire réagir la suspension de l'espèce carbonée avec un silicate alcalin, pour déposer de la silice sur la surface de l'espèce carbonée.

La réaction est généralement effectuée sous chauffage à une température comprise entre 70 et 90°C.

Le silicate alcalin peut être le silicate de sodium ou le silicate de potassium, de préférence du silicate de sodium.

De préférence, pendant la réaction avec le silicate alcalin, le pH est maintenu à une valeur variant de 8 à 10, de préférence de 8,5 à 9,5. Le maintien du pH peut se faire au moyen de l'ajout d'un agent acidifiant, tel que par exemple l'acide sulfurique, l'acide chlorhydrique, l'acide acétique, l'acide lactique, l'acide borique, l'acide citrique et l'acide phosphorique.

Le maintien du pH permet la précipitation de la silice chargée négativement et sa croissance sur la surface de l'espèce carbonée activée par le tensioactif cationique et donc chargée positivement.

Dans un but de simplification, quel que soit le taux de silice visé, il est possible de définir une épaisseur théorique, hypothèse dans laquelle la silice recouvre entièrement l'espèce carbonée d'une couche homogène. En dessous d'une certaine épaisseur théorique la silice ne recouvre pas totalement l'espèce carbonée. Dans ce cas, on considère que l'espèce carbonée est partiellement recouverte. Cette valeur n'a pas été déterminée expérimentalement et dépend de l'espèce carbonée utilisée.

Le taux de silice dépend de la surface spécifique en accord avec la formule suivante :

$$\frac{T}{1-T} = e_{théo} \times SS \times \rho_{sio2} \Leftrightarrow e_{théo} = \frac{T}{(1-T) \times SS \times \rho_{sio2}}$$

où T= taux de silice, défini par la formule $T=m_{SiO2}/(m_{SiO2}+m_c)$

où $m_{SiO2}$ est la masse de silice et $m_c$ est la masse de carbone.

$e_{théo}$ = épaisseur théorique en nm

SS = surface spécifique en $nm^2/g$ ($Xm^2/g \times 10^{18}$) déterminée par BET

$\rho_{sio2}$ = densité de la silice : $2{,}1.10^{21}$ $g/nm^3$

A titre d'illustration, pour une espèce carbonée de surface spécifique BET de 140 $m^2/g$, le taux de silice déposée sur l'espèce carbonée varie généralement de 3 à 60%, de préférence de 5 à 50% en poids par rapport au poids total (silice + carbone). En dessous de 3% les propriétés correspondent aux propriétés du noir de carbone, au-dessus de 60% les propriétés correspondant à celles de la silice précipitée à côté du noir de carbone.

La quantité de silicate alcalin ajoutée est généralement fonction de l'épaisseur théorique $e_{théo}$ de silice déposée sur l'espèce carbonée.

L'épaisseur de silice déposée sur l'espèce carbonée varie de préférence de 0,1 à 5 nm, de préférence encore de 0,2 à 3 nm.

En règle générale, le ratio entre le taux massique de silice (défini comme la quantité de silice sur la quantité totale de noir de carbone et de silice) déposée sur l'espèce carbone et la surface spécifique BET du noir de carbone varie de 0,02 à 0,36 de préférence à 0,03 à 0,21, le taux massique de silice déposée sur l'espèce carbone étant exprimé en pourcentage et la BET en $m^2/g$.

Sur la figure 1, on a représenté de façon schématique un exemple d'une espèce carbonée totalement recouverte de silice, obtenue selon l'invention. Sur l'espèce carbonée 1 est adsorbé le tensioactif cationique 2 qui forme une fine couche. La silice 3 se dépose sur la couche de tensioactif cationique 2. Le fort taux de tensioactif cationique permet à celui-ci de recouvrir totalement l'espèce carbonée. Le fort taux de silice permet à celle-ci de recouvrir totalement le tensioactif cationique et donc l'espèce carbonée. Le tensioactif cationique n'est pas apparent à la surface de la charge obtenue.

Sur la figure 2, on a représenté de façon schématique une espèce carbonée partiellement recouverte de silice, obtenue selon l'invention. Sur l'espèce carbonée 1 est adsorbé le tensioactif cationique 2 qui forme une fine couche. La silice 3 se dépose partiellement sur la couche de tensioactif cationique 2. Le fort taux de tensioactif cationique permet à celui-ci de recouvrir totalement l'espèce carbonée. Le faible taux de silice ne permet à celle-ci de recouvrir que partiellement le tensioactif cationique et donc l'espèce carbonée. Le tensioactif cationique est apparent à la surface de la charge obtenue.

Sur la figure 3, on a représenté de façon schématique une espèce carbonée partiellement recouverte de silice, obtenue selon l'invention. Sur l'espèce carbonée 1 est adsorbé partiellement le tensioactif cationique 2. La silice 3 se dépose partiellement sur le tensioactif cationique 2. Le faible taux de tensioactif cationique ne permet à celui-ci de ne recouvrir que partiellement l'espèce carbonée. Le faible taux de silice permet à celle-ci de recouvrir exactement le tensioactif cationique. Le tensioactif cationique n'est pas apparent à la surface de la charge obtenue. La silice recouvre partiellement la surface de l'espèce carbonée.

L'invention est illustrée par les exemples qui suivent.

**Exemples**

Mesures et tests utilisés

Surface spécifique BET:

La surface spécifique BET (notée SS) est déterminée de manière connue, selon la méthode de Brunauer-Emmet-Teller décrite dans "The Journal of the American Chemical Society" Vol. 60, page 309, février 1938 et correspondant à la norme AFNOR-NF-T 45 007 (novembre 1987).

Propriétés dynamiques

Les propriétés dynamiques $\Delta G^*$ et $\tan(\delta)_{max}$ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1% à 100% (cycle aller), puis de 100% à 0,1% (cycle retour). Le résultat exploité est le facteur de perte $\tan(\delta)$. Pour le cycle retour, on indique la valeur maximale de $\tan(\delta)$ observée, noté $\tan(\delta)_{max}$ retour.

Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 100% d'allongement (notés MA100) et à 300% d'allongement (notés MA300).

Mesure du taux de silice expérimental

Le taux de silice est mesuré selon le protocole suivant :

- Dans une capsule platine préalablement tarée ($m_1$), introduire 500 mg de noir de carbone ($m_2$),
- Pré calciner à l'aide d'un bec Meker,
- Calciner au four à moufle 2h à 800°C,
- Laisser refroidir au dessiccateur,
- Peser à nouveau la capsule ($m_3$),
- Ajouter 10 ml d'acide fluorhydrique et amener à sec par bain de sable,
- Peser à nouveau la capsule ($m_4$).

On en déduit alors la taux massique de silice par le calcul suivant :

$$\%SiO_2 = \frac{(m_3 - m_4)}{m_2} \times 100$$

Mesure de la distribution de sites en énergie (DSE)

La distribution de sites en énergie (encore appelée distribution d'énergie d'adsorption de gaz sur un solide), renseigne sur l'hétérogénéité des surfaces solides. Elle est déterminée à partir des mesures des isothermes d'adsorption d'azote ou d'autres gaz en considérant que l'isotherme global correspond à la superposition d'isothermes locales, chaque isotherme locale correspondant à un type de site donné, caractérisé par une valeur caractéristique $\varepsilon_{site}$ d'énergie d'adsorption (voir comme référence les travaux de A. Schroder et coll. dans Carbon 40 (2002) 207-210).

L'énergie d'adsorption est reliée à la pression par l'équation suivante :

$$\varepsilon = -RT.\ln\left( P/P_0 \right)$$

où P est la pression partielle du gaz, P0 la pression de vapeur saturante du gaz à la température de la mesure. Le rapport P/P0 est appelé pression relative. R est la constante de gaz parfaits et T la température.

L'isotherme d'adsorption globale Q$\varepsilon$ sur la surface hétérogène peut s'écrire comme une somme d'isothermes locales, chaque isotherme locale correspondant à un type de site donné, caractérisé par une valeur caractéristique $\varepsilon_{site}$ de l'énergie d'adsorption. Cette somme s'écrit ainsi :

$$\frac{Q(\varepsilon)}{Q_{mono}} = \int_0^{+\infty} \chi(\varepsilon_{site})\theta(\varepsilon_{site},\varepsilon).d\varepsilon_{site}$$

où Q$\varepsilon$ est l'isotherme d'adsorption, $\theta(\varepsilon_{site},\varepsilon)$ est l'isotherme locale et $\chi(\varepsilon_{site})$ est la distribution des sites en énergie.

Dans l'hypothèse de la condensation :

$$\theta(\varepsilon_{site},\varepsilon) = 1 \quad si \quad \varepsilon < \varepsilon_{site}$$

$$\theta(\varepsilon_{site},\varepsilon) = 0 \quad si \quad \varepsilon > \varepsilon_{site}$$

et en utilisant la variable expérimentale comme étant la pression partielle, on peut écrire l'équation permettant de calculer la distribution de sites en énergie :

$$\chi(\varepsilon_{site}) = -\frac{P}{RT}.\frac{\partial}{\partial P}\left(\frac{Q(P)}{Q_{mono}}\right)$$

Les isothermes d'adsorption $P/P_0$ ont été déterminées à partir d'un appareil de Micromeritics type ASAP 2010.

Pour que la mesure soit représentative, l'échantillon doit être équivalent en surface de 15 à 50 $m^2$, soit par exemple pour un noir de carbone de 120 $m^2/g$, une prise d'essai comprise entre 125 mg et 417 mg.

L'échantillon est conditionné pendant une heure à 200°C sur le poste de dégazage. On enlève ainsi un maximum d'eau et de traces éventuelles de gaz parasites piégés à la surface de l'échantillon, grâce à une pompe à vide très puissante.

Puis, la mesure de DSE nécessitant alors une pesée à ce moment pour connaître la masse exacte de produits, on effectue une étape de remise à pression atmosphérique par addition d'hélium.

Après la pesée, on effectue un dégazage de 30 minutes sur le poste de mesure à 200°C, pour éliminer l'hélium introduit avant la pesée.

La mesure est effectuée à -273°C, l'échantillon étant plongé dans un bain d'azote liquide pendant la mesure.

<u>Exemple 1</u>

On prépare un noir de carbone recouvert de silice selon le procédé selon l'invention.

Dans un bécher de 250 mL (diamètre 70 mm), on introduit dans cet ordre :

- 0,848 g de bromure de cétyltriméthyl ammonium (CTAB),
- 10g de noir de carbone N134,
- 150 mL d'eau en remuant à la spatule pour répandre le CTAB.

On sonifie pendant 8 minutes à l'aide d'une sonde à ultrason 19 mm de référence 630-0208 d'amplitude 61 $\mu$m lorsqu'utilisée à 100% de son amplitude, en combinaison avec un booster (BHN15GC) qui multiplie par 1,5 l'amplitude (soit 91,5 $\mu$m pour une utilisation à 100% de son amplitude). Le générateur utilisé est Sonics VibraCell VCF1500, de 1500W, 20kHz, utilisé ici à 60% de l'amplitude maximale. La sonification est faite dans un bain de glace pour éviter l'échauffement de la suspension.

Dans un tricol de 500 mL, on introduit la suspension et on ajoute 100 mL d'eau (en rinçant le bêcher). On équipe le ballon d'un réfrigérant et on chauffe le milieu à 80°C, sous agitation.

On ajoute alors la quantité suffisante de soude 1M pour élever le pH à 9.

On prépare une solution de silicate de sodium à 25,6 g de $SiO_2$/L. Pour cela, on dilue 4,27 g de silicate de sodium (7,85%$Na_2O$.26,7%$SiO_2$ massique) dans 40,19 mL d'eau. Cette solution permet de viser un taux théorique de silice déposée de 10% en poids par rapport au poids (silice+carbone), et une épaisseur théorique de 0,38 nm.

Le taux de silice est calculé comme explicité précédemment grâce à la formule :

$$T=m_{SiO2}/(m_{SiO2}+m_c)$$

où $m_{SiO2}$ est la masse de silice et $m_c$ est la masse de carbone.

L'épaisseur théorique de silice déposée est calculée de la manière suivante :

$$\boxed{\frac{T}{1-T} = e_{théo} \times SS \times \rho_{sio2} \Leftrightarrow e_{théo} = \frac{T}{(1-T)\times SS \times \rho_{sio2}}}$$

où T= taux de silice,
$e_{théo}$ = épaisseur théorique en nm
SS = surface spécifique en $nm^2/g$ ($Xm^2/g \times 10^{18}$)
$\rho_{sio2}$ = densité de la silice = $2,1.10^{21}$ $g/nm^3$

La quantité de surfactant est exprimée en nombre de fonctions cationiques par $nm^2$ de noir de carbone (notée fonction +/$nm^2$), elle dépend donc de la masse et de la surface spécifique du substrat :

Surface à recouvrir S = masse de noir de carbone x BET (SS) du noir de carbone, en $nm^2$

Nombre de molécules de CTAB = S x fonction+/$nm^2$ car une seule fonction cationique dans ce cas là.

Nombre de moles de CTAB = S x fonction+/$nm^2$ / $6,02.10^{23}$

Masse de CTAB = S x fonction+/$nm^2$ x $MM_{ctab}$ / $6,02.10^{23}$

$MM_{ctab}$ étant la masse molaire du CTAB : 364,46 g/mol

Au moyen de deux pompes péristaltiques, on ajoute simultanément la solution de précurseur à 2 mL/min et l'acide sulfurique 0,82 M à 15 mL/min, de manière à ce que le pH, par régulation manuelle, soit constant à 9.

Une fois l'ajout terminé, on laisse réagir 30 minutes à 80°C, sous agitation.

Le milieu réactionnel est ensuite réparti dans 2 godets de masse égale. La charge est récupérée par centrifugation (centrifugeuse à godet sigma 4K15, 8000 tour/min, 10 min, 20°C).

On réalise ensuite 4 lavages. Pour chaque lavage, on élimine le surnageant, on récupère les gâteaux de charge, qu'on re-disperse dans 200 mL d'eau, soit 100 mL par godet, et on re-centrifuge. Au dernier lavage, le surnageant atteint un pH de 7.

On obtient un taux de $SiO_2$ de 8,23% en poids.

Si l'on considère que la silice est déposée en une couche homogène sur toute la surface du noir, on obtient une épaisseur théorique $ESiO_2$= 0,30 nm, pour une épaisseur visée de 0,38 nm.

On obtient donc une épaisseur théorique de silice proche de l'épaisseur théorique visée.

Exemple 2

Trois synthèses sont effectuées selon le protocole déjà décrit à l'exemple 1, en faisant varier le taux de silice, selon le plan d'expérience indiqué dans le tableau 1. Le noir de carbone utilisé est le N134.

Tableau 1

| | Epaisseur visée (nm) | Taux de silice visé (% en poids) | Masse de silicate (g/10g de N134) | Volume d'eau pour la solution de silicate (mL) |
|---|---|---|---|---|
| 1 | 0,5 | 12,8 | 5,65 | 53,17 |
| 2 | 1,5 | 30,6 | 16,96 | 159,51 |
| 3 | 3 | 46,9 | 33,92 | 319,0 |

Protocole

Dans un bécher de 250 mL, on introduit dans cet ordre :

- 0,8476 g de bromure de cétyltriméthyl ammonium (CTAB),
- 10g de N347,
- 150 mL d'eau en remuant à la spatule pour répandre le CTAB.

On homogénéise pendant 10 minutes au rotor-stator ultra-turrax (vitesse 3-4).

On sonifie pendant 8 minutes à l'aide d'une sonde à ultrason 19 mm de référence 630-0208 d'amplitude 61 μm lorsqu'utilisée à 100% de son amplitude, en combinaison avec un booster (BHN15GC) qui multiplie par 1,5 l'amplitude (soit 91,5μm pour une utilisation à 100% de son amplitude). Le générateur utilisé est Sonics VibraCell VCF1500, de 1500W, 20kHz, utilisé ici à 60% de l'amplitude maximale. La sonification est faite dans un bain de glace pour éviter l'échauffement de la suspension.

Dans un tricol de 1L, on introduit la totalité de la suspension. On chauffe le milieu à 70°C au moyen d'un bain thermostaté, sous agitation.

On ajoute la quantité suffisante de soude 1M pour élever le pH à 9, quand le milieu est stable en température.

On prépare une solution de silicate de sodium. Pour cela, on dilue du silicate de sodium $Na_2SiO_3$ dans l'eau selon les proportions indiquées dans le tableau 1.

On l'introduit dans le ballon au moyen d'une pompe péristaltique, à raison de 2 mL par minute (soit 23,5% en poids par heure). On introduit simultanément de l'acide sulfurique 0,82 M pour maintenir le pH à 9 pendant l'addition du silicate (pompe péristaltique réglée à 8 mL/min).

Une fois l'ajout terminé, on laisse réagir 30 minutes à 70°C, sous agitation.

Le milieu réactionnel est ensuite réparti dans 2 godets de masse égale. La charge est récupérée par centrifugation (centrifugeuse à godet sigma 4K15, 8000 tour/min, 10 min, 20°C).

On réalise ensuite 4 lavages. Pour chaque lavage, on re-disperse la charge dans 200 mL d'eau, soit 100 mL par godet, et on re-centrifuge. Au dernier lavage, le surnageant atteint un pH de 7.

Résultats

Les résultats sont présentés dans le tableau 2.

Tableau 2

| | Epaisseur visée (nm) | Epaisseur effective calculée* (nm) | Taux de silice visé (% en poids) | Taux de silice effectif (% en poids) | Rendement |
|---|---|---|---|---|---|
| 1 | 0,5 | 0,41 | 12,8 | 10,7 | 83,6 |
| 2 | 1,5 | 1,35 | 30,6 | 28,4 | 92,8 |
| 3 | 3 | 2,65 | 46,9 | 43,8 | 93,4 |
| * calculée à partir du taux de silice effectif | | | | | |

La figure 4 représente les courbes de distribution de site en énergie des différents composés 1, 2 et 3. Est également représentée la courbe de distribution de site en énergie d'un composé de noir de carbone N134 recouvert de 1 molécule de CTAB par $nm^2$ de substrat, ainsi que celle de la silice 160MP seule et celle du noir de carbone N134 seul.

La figure 4 montre que la courbe (b) du composé 2 (1,35 nm de silice) et la courbe (a) du composé 3 (2,65 nm de silice) sont très proches de la courbe (c) de la silice. On observe un bon recouvrement.

La courbe (e) du composé 1 (0,41 nm de silice) est intermédiaire entre la courbe (c) de la silice et la courbe (d) du composé noir de carbone recouvert de 1 molécule de CTAB par $nm^2$. La surface du noir de carbone n'est donc vraisemblablement pas complètement recouverte et le CTAB est apparent.

Exemple 3

On réalise différentes synthèses de noir de carbone N134 recouvert de silice, selon le protocole décrit aux exemples 1 ou 2.

Les données expérimentales et les résultats sont décrits dans le tableau 3.

Tableau 3

| Charge n° | fonction+ /$nm^2$ | Taux de silice visé (%en poids) | Silice introduite (% en poids) | Taux de silice effectif (% en poids) | Rendement |
|---|---|---|---|---|---|
| 1 | 1 | 5 | 6,25 | 5,08 | 81,3 |
| 2 | 1 | 10 | 12,5 | 9,77 | 78,2 |
| 3 | 1 | 10 | 12,5 | 10,46 | 83,7 |
| 4 | 1 | 10 | 12,5 | 8,78 | 70,2 |
| 5 | 1 | 25 | 27,7 | 25,86 | 93,4 |
| 6 | 1 | 25 | 27,7 | 25,07 | 90,5 |
| 7 | 0,5 | 10 | 12,5 | 10,46 | 83,7 |
| 8 | 0 | 10 | 12,5 | 1,58 | 12,6 |

Le rendement est défini de la façon suivante :

$$\text{Rendement} = \text{taux de silice effectif/taux de silice visé}$$

Le tableau 3 montre donc que les rendements du dépôt de silice pour les charges 1 à 7 sont bons et donc que la silice est bien déposée sur le noir de carbone.

Pour la charge 8 (l'exemple comparatif), le rendement est très faible. Cela est du à l'absence de CTAB lors de la synthèse. On voit donc l'importance de la présence de CTAB.

Exemple 4

Cet exemple vise à montrer l'influence de la quantité de CTAB sur le recouvrement du noir de carbone par la silice.

On réalise différentes synthèses de noir de carbone recouvert de silice (10g de N134, 10% en poids de silice), selon le protocole décrit à l'exemple 1, à ceci près que l'on utilise de l'acide chlorhydrique 1M à la place de l'acide sulfurique 0,82M. Pour préparer la solution de silicate de sodium, on dilue 4,27 g de silicate de sodium dans 40,19 mL d'eau.

Les synthèses sont réalisées pour différentes quantités de CTAB, comme indiqué dans le tableau 4. La charge 7 représente un exemple comparatif.

Tableau 4

| Synthèse | 1 | 2 | 3 | 4 | 5 | 6 | 7 |
|---|---|---|---|---|---|---|---|
| Quantité de CTAB/$nm^2$ (1) | 1 | 0,5 | 0,2 | 0,1 | 0,05 | 0,01 | 0 |
| (1) en nombre de molécules/$nm^2$ | | | | | | | |

On vise un taux de silice de 10% en poids.

Les résultats sont présentés dans le tableau 5.

Tableau 5

| | CTAB/ $nm^2$ | Masse CTAB pour 10g N134 | % en poids de CTAB | Taux de silice visé (% en poids) | Taux de silice effectif (% en poids) | Rendement (1) (%) |
|---|---|---|---|---|---|---|
| 1 | 1 | 0,8476 | 8,48 | 10 | 8,23 | 82 |
| 2 | 0,5 | 0,4238 | 4,24 | 10 | 8,5 | 85 |
| 3 | 0,2 | 0,1695 | 1,70 | 10 | 8,14 | 81 |
| 4 | 0,1 | 0,0848 | 0,85 | 10 | 9,27 | 93 |
| 5 | 0,05 | 0,0424 | 0,42 | 10 | 6,52 | 65 |
| 6 | 0,01 | 0,0085 | 0,08 | 10 | 1,81 | 18 |
| 7 | 0 | 0 | 0 | 10 | 1,4 | 14 |
| (1) taux de silice effectif/taux de silice visé | | | | | | |

La figure 5 représente les courbes $C_1$ à $C_7$ de distribution de sites en énergie des différents composés issus des synthèses 1 à 7. Est également représentée la courbe de distribution de sites en énergie d'un composé de noir de carbone N134 recouvert de 1 molécule de CTAB par $nm^2$ de substrat (courbe $C_8$), ainsi que celle de la silice seule ($C_9$) et celle du noir de carbone N134 seul ($C_{10}$).

La figure 5 montre que la courbe $C_1$ du composé obtenu par la synthèse 1 (1 CTAB/$nm^2$) est très proche de la courbe $C_9$ de la silice.

La courbe 2 du composé obtenu par la synthèse 2 (0,5 CTAB/$nm^2$) est proche de la courbe $C_9$ de la silice, mais à l'allure de la courbe $C_8$ du composé de noir de carbone N134 recouvert de 1 molécule de CTAB par $nm^2$ de substrat. Cela permet de penser que le composé issu de la synthèse 2 correspond à du noir de carbone partiellement recouvert de silice, une partie du CTAB restant visible.

Les meilleurs résultats en terme de recouvrement du noir de carbone par la silice sont donc obtenus pour des teneurs de 0,5 et 1 molécule/ $nm^2$ de CTAB.

Exemple 5

L'objet de cet exemple est de comparer les propriétés de différentes compositions de caoutchouc comprenant à titre de charge renforçante soit du noir de carbone seul, soit un mélange de noir de carbone et de silice, soit du noir de carbone recouvert de silice obtenu par le procédé selon l'invention (composés A et C).

Les formulations des compositions de caoutchouc sont données dans le tableau 6. Les quantités sont exprimées en parties pour 100 parties en poids d'élastomère (pce). Les formulations Mél 1, 2, 5-8, 11 et 12 représentent des exemples comparatifs.

Tableau 6

| | Mél 1 | Mé l 2 | Mél 3 | Mél 4 | Mél 5 | Mél 6 | Mél 7 | Mél 8 |
|---|---|---|---|---|---|---|---|---|
| GP 21730 | 100 | | | | | | | |
| N134 | 4 | 40 | 0 | 0 | 37,56 | 33,23 | 4 | 50 |
| A | 0 | 0 | 40,4 | 0 | 0 | 0 | 0 | 0 |
| C | 0 | 0 | 0 | 40,6 | 0 | 0 | 0 | 0 |
| silice (2) | 40 | 0 | 0 | 0 | 3,94 | 8,57 | 51,5 | 0 |
| Silane Liq. | 3,2 | 0 | 0,77 | 1,64 | 0,32 | 0,69 | 4,12 | 0 |
| DPG | 0,75 | 0 | 0 | 0 | 0,07 | 0,16 | 0,97 | 0 |
| 6-PPD | 1,5 | | | | | | | |
| Paraffine | 1 | | | | | | | |

(suite)

| | Mél 1 | Mé l 2 | Mél 3 | Mél 4 | Mél 5 | Mél 6 | Mél 7 | Mél 8 |
|---|---|---|---|---|---|---|---|---|
| GP 21730 | 100 | | | | | | | |
| Acide stéarique | 2 | | | | | | | |
| ZnO | 3 | | | | | | | |
| S | 1,5 | | | | | | | |
| CBS | 0,9 | | | | | | | |

| | Mél 9 | Mél 10 | Mél 11 | Mél 12 |
|---|---|---|---|---|
| NR (0) | 100 | | | |
| Noir de carbone (1) | 0 | 0 | 47,33 | 41,9 |
| A | 50,60 | 0 | 0 | 0 |
| B | 0 | 0 | 0 | 0 |
| C | 0 | 50,9 | 0 | 0 |
| silice (2) | 0 | 0 | 4,97 | 10,8 |
| Silane Liq. | 0,96 | 2,05 | 0,4 | 0,86 |
| DPG (3) | 0 | 0 | 0,09 | 0,2 |
| 6PPD (4) | 1,5 | | | |
| Paraffine | 1 | | | |
| Acide stéarique | 2 | | | |
| ZnO | 3 | | | |
| S | 1,5 | | | |
| CBS (5) | 0,9 | | | |

(0) NR : caoutchouc naturel (plastifié, peptisé)
(1) Noir de carbone N134
(2) Silice « Zeosil 1165MP » (Rhodia)
(3) Diphényl guanidine (accélérateur de vulcanisation)
(4) 6-para-phénylènediamine (agent anti-oxydant)
(5) CBS : N-cyclohexyl-2-benzothiazyle sulfénamide (« Santocure CBS » de la société Flexsys)

Les conditions de synthèse et les caractéristiques des composés A et C sont données dans le tableau 7.

Tableau 7

| | C | A |
|---|---|---|
| **Conditions de synthèse** | | |
| Taux de silice visé (%) | 18 | 11 |
| Taux de CTAB pour synthèse | 0,1 | 0,05 |
| **Caractéristiques Physico Chimiques** | | |
| Taux de silice (%) | 20,5 | 9,5 |
| **Surface spécifique** | | |
| BET ($m^2/g$) | 151,4 | 154,6 |

Les propriétés sont données dans les tableaux 8 et 9.

Tableau 8

| | 1 | 2 | 3 | 4 | 5 | 6 |
|---|---|---|---|---|---|---|
| | 1165MP-40(1) | N134 -40(1) | A-9%(2) CTAB 0,05(3) -40(1) | C- 20%(2) CTAB 0 1(3)-40(1) | N134-1165M P (9%(4)) -40(1) | N134-1165MP (20%(4)) -40(1) |
| MSA300 / MSA100 | 1,72 | 2,07 | 2,09 | 2,02 | 2,08 | 2,08 |
| $\tan\delta_{max}$ retour | 0,148 | 0,193 | 0,171 | 0,137 | 0,185 | 0,162 |

Tableau 9

| | 7 | 8 | 9 | 10 | 11 | 12 |
|---|---|---|---|---|---|---|
| | 1165M P-50(1) | N134 -50(1) | A- 9%(2) CTAB -50(1) | C- 20%(2) CTAB 0,1(3)-50(1) | N134-1165M (9%(4)) -50(1) | N134-1165MP (20%(4)) -50(1) |
| MSA300/ MSA100 | 1,79 | 2,12 | 2,13 | 2,14 | 2,23 | 2,11 |
| $\tan\delta_{max}$ retour | 0,203 | 0,251 | 0,218 | 0,196 | 0,238 | 0,223 |

Les grandeurs indicées dans le tableau 8 et dont la signification est donnée ci-dessous sont indiquées dans le tableau 8 pour en faciliter la lecture. Les valeurs plus précises sont celles des tableaux 6 et 7.

(1) teneur en charge (silice et/ou noir de carbone, ou composé A ou C selon le cas)
(2) taux massique de silice dans le composé A ou C
(3) taux de CTAB
(4) taux massique de silice dans le mélange silice + noir de carbone

La diminution de la valeur de $\tan\delta_{max}$ retour traduit une diminution de l'hystérèse de la composition correspondante, donc une diminution de la résistance au roulement de pneumatiques qui utiliseraient une telle composition.

On constate ainsi que l'hystérèse de la composition 3 est meilleure que celle de la composition 5 qui est meilleure que celle de la composition 2.

De même respectivement pour les compositions 8, 9 et 11.

On peut donc en conclure que l'hystérèse d'une composition comprenant un noir de carbone recouvert de silice obtenu par le procédé selon l'invention est meilleure que celle d'une composition contenant un mélange noir de carbone + silice, qui est meilleure que celle d'une composition contenant du noir de carbone seul.

Parallèlement, la comparaison des compositions 2, 3 et 5 ; 8, 9 et 11 ; 2, 4 et 6 ; 8, 10 et 12 montre que les propriétés de renforcement après cuisson d'une composition comprenant un noir de carbone recouvert de silice obtenu par le procédé selon l'invention, d'une composition contenant un mélange noir de carbone + silice, et d'une composition contenant du noir de carbone seul sont équivalentes.

Ainsi, on peut conclure que le procédé selon l'invention permet d'obtenir des compositions comprenant un noir de carbone recouvert de silice qui présentent un bon compromis renforcement-hystérèse : ces compositions conduisent à un renforcement équivalent à celui d'une composition contenant du noir de carbone seul, tandis que l'hystérèse est meilleure que celle d'une composition contenant du noir de carbone seul et que celle d'une composition contenant un mélange de noir de carbone et de silice.

## Revendications

1. Procédé de préparation d'une espèce carbonée recouverte partiellement ou totalement de silice, comprenant les étapes suivantes :

- on met en contact l'espèce carbonée dans un milieu aqueux en présence d'un ou plusieurs tensioactifs cationiques,
- on ajuste le pH du milieu réactionnel de la suspension à l'aide d'un agent alcalin jusqu'à un pH variant de 8 à 10,
- on ajoute dans le milieu réactionnel obtenu un ou plusieurs silicates alcalins, en maintenant le pH du milieu réactionnel entre 8 et 10.

**2.** Procédé selon la revendication précédente, **caractérisé en ce que** la mise en contact de l'espèce carbonée et du ou des tensioactifs cationiques est réalisée sous chauffage à une température comprise entre 70°C et 90°C.

**3.** Procédé selon la revendication 1 ou 2, **caractérisé en ce que** le pH du milieu réactionnel après la mise en contact de l'espèce carbonée et du ou des tensioactifs cationiques est ajusté jusqu'à un pH variant de 8,5 à 9,5.

**4.** Procédé selon l'une quelconque des revendications précédentes, **caractérisé en ce que** l'espèce carbonée est choisie parmi les noirs de carbone, les graphites naturels et synthétiques, les fibres de carbone, les graphènes, les fullerènes, les noirs d'acétylène et les nanotubes de carbone.

**5.** Procédé selon l'une quelconque des revendications précédentes, **caractérisé en ce que** le ou les tensioactifs cationiques sont choisis parmi le bromure de cétyltriméthyl ammonium, l'hexadécylamine, le monohydrate de sodium 1-pentanesulfonate, l'éthonium, la décaméthoxine, le bromure de tétradécyltriméthylammonium, le bromure de décyltriméthylammonium, le bromure de dodécyltriméthylammonium, le chlorure de cétyltriméthylammonium, l'hydroxyde de tétraméthylammonium, le bromure de dodécylpyridinium et le chorure de cétylpyridinium.

**6.** Procédé selon l'une quelconque des revendications précédentes, **caractérisé en ce que** le ou les tensioactifs cationiques sont le bromure de cétyltriméthyl ammonium.

**7.** Procédé selon l'une quelconque des revendications précédentes, **caractérisé en ce que** la quantité de tensioactif cationique ajoutée est telle que la densité de charges cationiques de surface spécifique BET de l'espèce carbonée varie de 0,05 à 2 charges cationiques par $nm^2$ de l'espèce carbonée.

**8.** Procédé selon l'une quelconque des revendications précédentes, **caractérisé en ce que** le ou les tensioactifs cationiques sont présents en une quantité variant de 0,1 à 1,5, de préférence de 0,5 à 1,5 molécules par $nm^2$ de l'espèce carbonée.

**9.** Procédé selon l'une quelconque des revendications précédentes **caractérisé en ce que** la réaction avec le silicate alcalin est effectuée sous chauffage à une température comprise entre 70 et 90°C.

**10.** Procédé selon l'une quelconque des revendications précédentes, **caractérisé en ce que** le ou les silicates alcalins sont des silicates de sodium.

**11.** Procédé selon l'une quelconque des revendications précédentes, **caractérisé en ce que** la quantité de silicate alcalin ajoutée est fonction de l'épaisseur théorique $e_{theo}$ de silice déposée sur l'espèce carbonée, qui répond à la formule

$$\frac{T}{1-T} = e_{théo} \times SS \times \rho_{sio2} \Leftrightarrow e_{théo} = \frac{T}{(1-T) \times SS \times \rho_{sio2}}$$

dans laquelle

T représente le taux massique de silice $T=m_{SiO2}/(m_{SiO2}+m_c)$ où $m_{SiO2}$ est la masse de silice et $m_c$ est la masse de carbone $e_{théo}$ = épaisseur théorique en nm
SS = surface spécifique en $nm^2/g$
$\rho_{sio2}$ = densité de la silice = $2{,}1.10^{21}$ $g/nm^3$

**Patentansprüche**

1. Verfahren zur Herstellung einer teilweise oder vollständig mit Siliciumdioxid bedeckten Kohlenstoffspezies, das folgende Schritte umfasst:

    - man bringt die Kohlenstoffspezies in einem wässrigen Medium mit einem oder mehreren kationischen Tensiden in Berührung,
    - man stellt den pH-Wert des Reaktionsmediums der Suspensionen mit einem alkalischen Mittel auf einen pH-Wert im Bereich von 8 bis 10 ein,
    - man gibt ein oder mehrere Alkalisilikate zu dem erhaltenen Reaktionsmedium, wobei der pH-Wert des Reaktionsmediums zwischen 8 und 10 gehalten wird.

2. Verfahren nach dem vorhergehenden Anspruch, **dadurch gekennzeichnet, dass** das Inberührungbringen der Kohlenstoffspezies und des kationischen Tensids bzw. der kationischen Tenside unter Erhitzen auf eine Temperatur zwischen 70 °C und 90 °C durchgeführt wird.

3. Verfahren nach Anspruch 1 oder 2, **dadurch gekennzeichnet, dass** der pH-Wert des Reaktionsmediums nach dem Inberührungbringen der Kohlenstoffspezies und des kationischen Tensids bzw. der kationische Tenside auf einen pH-Wert zwischen 8,5 und 9,5 eingestellt wird.

4. Verfahren nach einem der vorhergehenden Ansprüche, **dadurch gekennzeichnet, dass** die Kohlenstoffspezies aus Rußen, natürlichen und synthetischen Graphiten, Kohlefasern, Graphenen, Fullerenen, Acetylen-Rußen und Kohlenstoffnanoröhren ausgewählt wird.

5. Verfahren nach einem der vorhergehenden Ansprüche, **dadurch gekennzeichnet, dass** das kationische Tensid bzw. die kationischen Tenside aus Cetyltrimethylammoniumbromid, Hexadecylamin, Natrium-1-pentansulfonat-monohydrat, Ethonium, Decamethoxin, Tetradecyltrimethylammoniumbromid, Decyltrimethylammoniumbromid, Dodecyltrimethylammoniumbromid, Cetyltrimethylammoniumchlorid, Tetramethylammoniumhydroxid, Dodecylpyridiniumbromid und Cetylpyridiniumchlorid ausgewählt wird bzw. werden.

6. Verfahren nach einem der vorhergehenden Ansprüche, **dadurch gekennzeichnet, dass** es sich bei dem kationischen Tensid bzw. den kationischen Tensiden um Cetyltrimethylammoniumbromid handelt.

7. Verfahren nach einem der vorhergehenden Ansprüche, **dadurch gekennzeichnet, dass** die zugegebene Menge an kationischem Tensid so beschaffen ist, dass die Dichte kationischer Ladungen der spezifischen BET-Oberfläche der Kohlenstoffspezies im Bereich von 0,05 bis 2 kationischen Ladungen pro $nm^2$ Kohlenstoffspezies liegt.

8. Verfahren nach einem der vorhergehenden Ansprüche, **dadurch gekennzeichnet, dass** das kationische Tensid bzw. die kationischen Tenside in einer Menge im Bereich von 0,1 bis 1,5 und vorzugsweise von 0,5 bis 1,5 Molekülen pro $nm^2$ Kohlenstoffspezies vorliegt bzw. vorliegen.

9. Verfahren nach einem der vorhergehenden Ansprüche, **dadurch gekennzeichnet, dass** die Reaktion mit dem Alkalisilikat unter Erhitzen auf eine Temperatur zwischen 70 und 90 °C durchgeführt wird.

10. Verfahren nach einem der vorhergehenden Ansprüche, **dadurch gekennzeichnet, dass** es sich bei dem Alkalisilikat bzw. den Alkalisilikaten um Natriumsilikate handelt.

11. Verfahren nach einem der vorhergehenden Ansprüche, **dadurch gekennzeichnet, dass** die zugegebene Menge an Alkalisilikat von der theoretischen Dicke $e_{theo}$ des auf der Kohlenstoffspezies abgeschiedenen Siliciumdioxids abhängt, die der folgenden Formel entspricht:

$$\frac{T}{1-T} = e_{théo} \times SS \times \rho_{sio2} \Leftrightarrow e_{théo} = \frac{T}{(1-T) \times SS \times \rho_{sio2}}$$

wobei

T für den Massengehalt an Siliciumdioxid $T = m_{SiO2}/(m_{SiO2}+m_c)$ steht, wobei $m_{SiO2}$ für die Masse von Siliciumdioxid steht und $m_c$ für die Masse von Kohlenstoff steht,
$e_{theo}$ = theoretische Dicke in nm,
SS = spezifische Oberfläche in $nm^2/g$,
$\rho_{sio2}$ = Dichte des Siliciumdioxids = $2{,}1.10^{21}$ $g/nm^3$.

## Claims

**1.** Process for preparing a carbon species partially or completely covered with silica, comprising the following steps:

- the carbon species is brought into contact, in an aqueous medium, with one or more cationic surfactants,
- the pH of the reaction medium of the suspension is adjusted using an alkaline agent to a pH that varies from 8 to 10,
- one or more alkali metal silicates are added to the reaction medium obtained, while maintaining the pH of the reaction medium between 8 and 10.

**2.** Process according to the preceding claim, **characterized in that** the carbon species and the cationic surfactant(s) are brought into contact while heating at a temperature between 70°C and 90°C.

**3.** Process according to Claim 1 or 2, **characterized in that** the pH of the reaction medium after the carbon species and the cationic surfactant(s) have been brought into contact is adjusted to a pH that varies from 8.5 to 9.5.

**4.** Process according to any one of the preceding claims, **characterized in that** the carbon species is selected from carbon blacks, natural and synthetic graphites, carbon fibres, graphenes, fullerenes, acetylene blacks and carbon nanotubes.

**5.** Process according to any one of the preceding claims, **characterized in that** the cationic surfactant(s) is (are) selected from cetyltrimethylammonium bromide, hexadecylamine, sodium 1-pentanesulphonate monohydrate, ethonium, decamethoxine, tetradecyltrimethylammonium bromide, decyltrimethylammonium bromide, dodecyltrimethylammonium bromide, cetyltrimethylammonium chloride, tetramethylammonium hydroxide, dodecylpyridinium bromide and cetylpyridinium chloride.

**6.** Process according to any one of the preceding claims, **characterized in that** the cationic surfactant(s) is (are) cetyltrimethylammonium bromide.

**7.** Process according to any one of the preceding claims, **characterized in that** the amount of cationic surfactant added is such that the cationic charge density of the BET specific surface area of the carbon species varies from 0.05 to 2 cationic charges per $nm^2$ of the carbon species.

**8.** Process according to any one of the preceding claims, **characterized in that** the cationic surfactant(s) is (are) present in an amount that varies from 0.1 to 1.5, preferably from 0.5 to 1.5 molecules per $nm^2$ of the carbon species.

**9.** Process according to any one of the preceding claims, **characterized in that** the reaction with the alkali metal silicate is carried out while heating at a temperature between 70°C and 90°C.

**10.** Process according to any one of the preceding claims, **characterized in that** the alkali metal silicate(s) is (are) sodium silicates.

**11.** Process according to any one of the preceding claims, **characterized in that** the amount of alkali metal silicate added is a function of the theoretical thickness $e_{theo}$ of silica deposited on the carbon species, which corresponds to the formula:

$$\frac{T}{1-T} = e_{theo} \times SS \times \rho_{SiO_2} \Leftrightarrow e_{theo} = \frac{T}{(1-T) \times SS \times \rho_{SiO_2}}$$

in which

T represents the silica content by mass $T=m_{SiO2}/(m_{SiO2}+m_c)$ where $m_{SiO2}$ is the mass of silica and $m_c$ is the mass of carbon $e_{theo}$ = theoretical thickness in nm
SS = specific surface area in $nm^2/g$
$\rho_{SiO_2}$ = density of the silica = $2.1\times10^{21}$ $g/nm^3$.

FIG.1

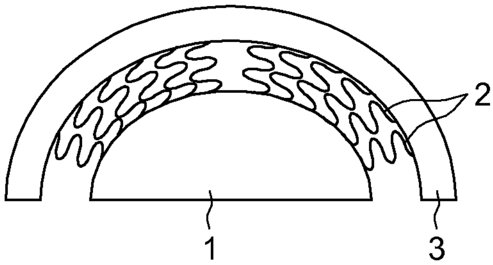


FIG.2

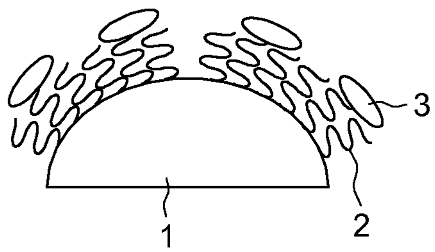


FIG.3

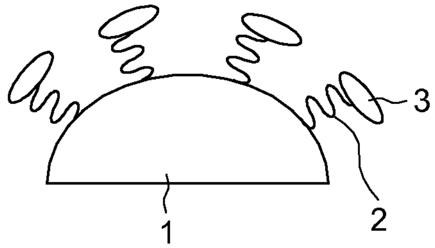

# FIG.4

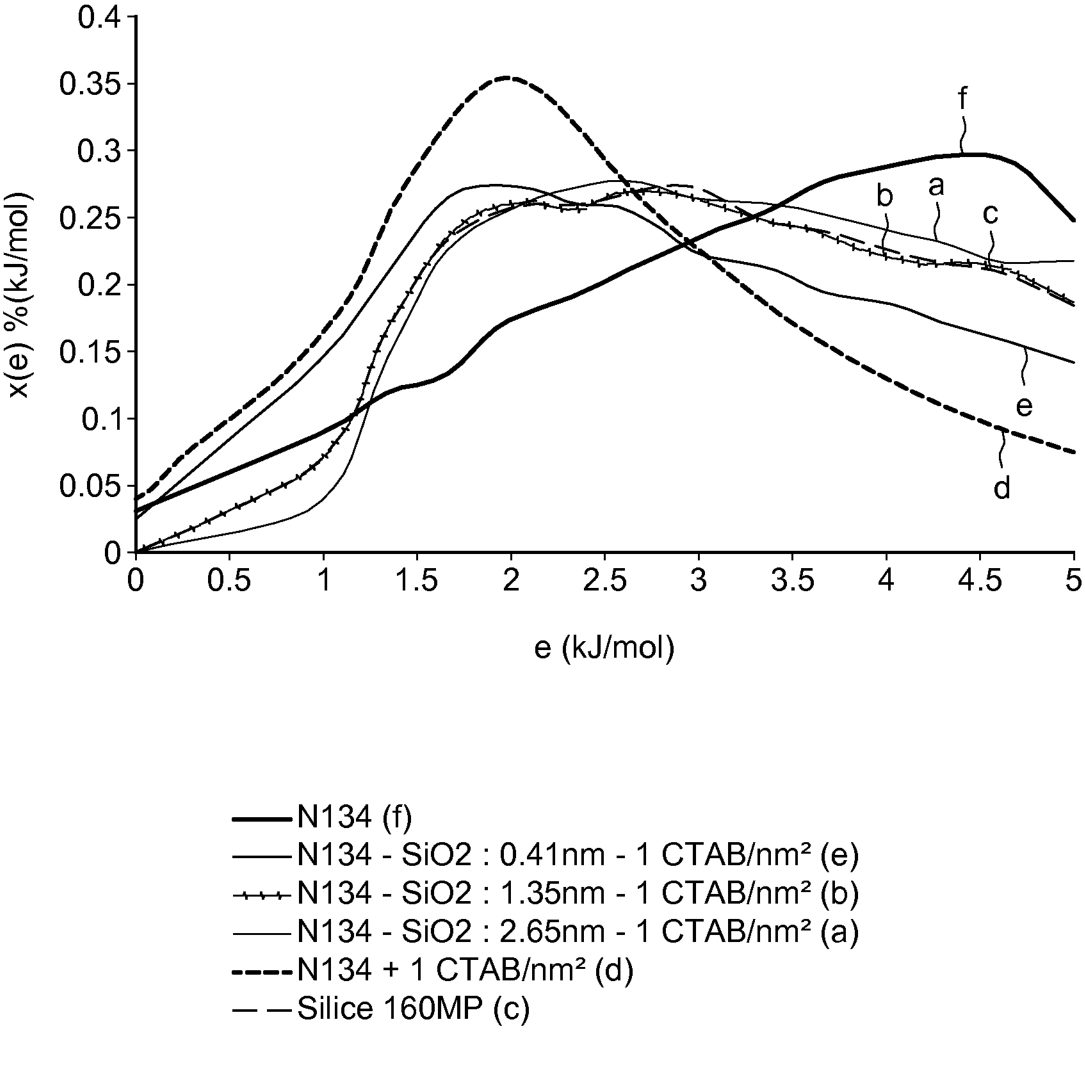
0.4
0.35
0.3
0.25
0.2
0.15
0.1
0.05
0
x(e) %(kJ/mol)
0
0.5
1
1.5
2
2.5
3
3.5
4
4.5
5
e (kJ/mol)
f
a
b
c
e
d
N134 (f)
N134 - SiO2 : 0.41nm - 1 CTAB/nm² (e)
N134 - SiO2 : 1.35nm - 1 CTAB/nm² (b)
N134 - SiO2 : 2.65nm - 1 CTAB/nm² (a)
N134 + 1 CTAB/nm² (d)
Silice 160MP (c)

FIG.5

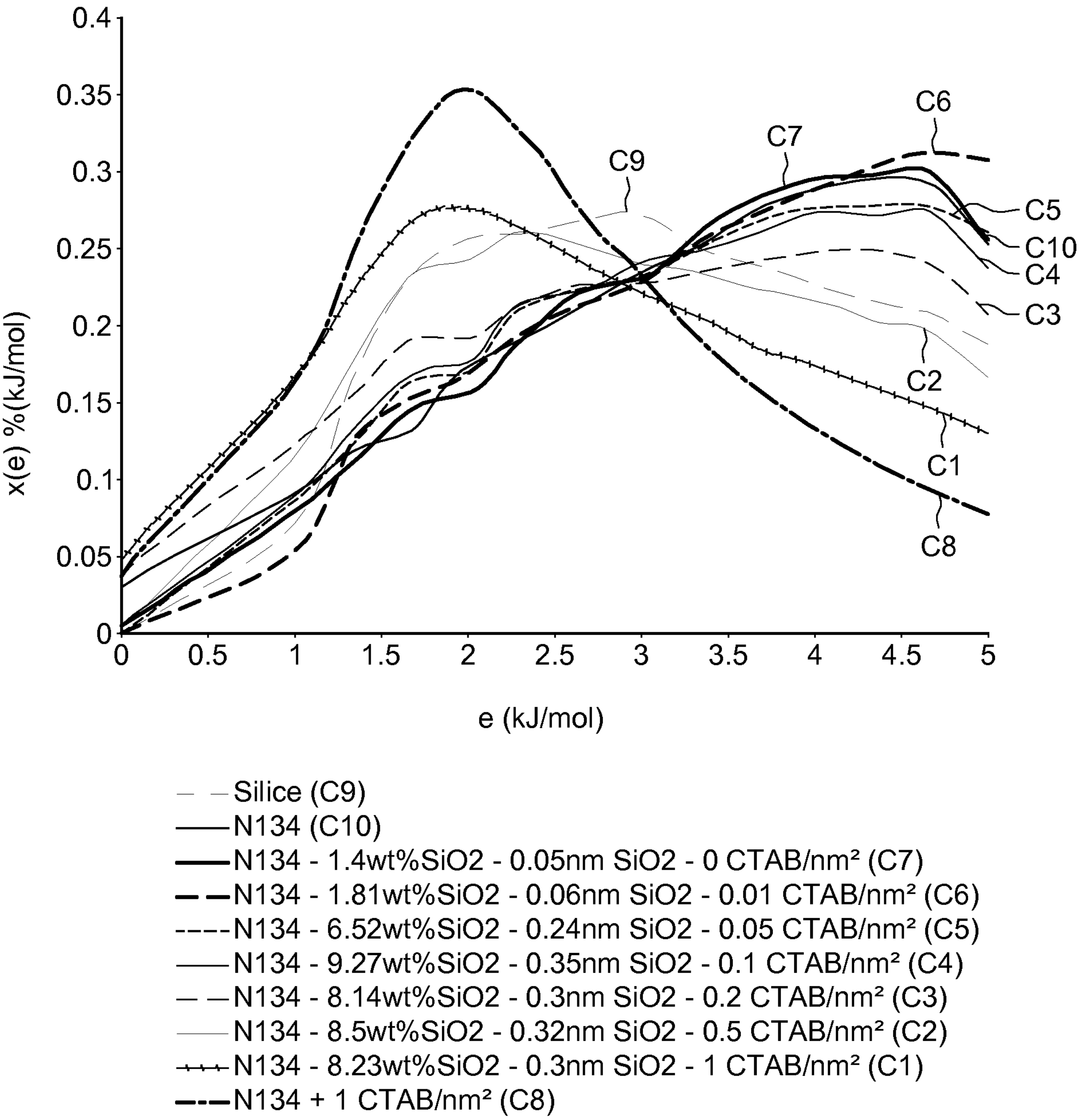
0.4
0.35
0.3
0.25
0.2
0.15
0.1
0.05
0
0
0.5
1
1.5
2
2.5
3
3.5
4
4.5
5
x(e) %(kJ/mol)
e (kJ/mol)
C6
C7
C9
C5
C10
C4
C3
C2
C1
C8
Silice (C9)
N134 (C10)
N134 - 1.4wt%SiO2 - 0.05nm SiO2 - 0 CTAB/nm² (C7)
N134 - 1.81wt%SiO2 - 0.06nm SiO2 - 0.01 CTAB/nm² (C6)
N134 - 6.52wt%SiO2 - 0.24nm SiO2 - 0.05 CTAB/nm² (C5)
N134 - 9.27wt%SiO2 - 0.35nm SiO2 - 0.1 CTAB/nm² (C4)
N134 - 8.14wt%SiO2 - 0.3nm SiO2 - 0.2 CTAB/nm² (C3)
N134 - 8.5wt%SiO2 - 0.32nm SiO2 - 0.5 CTAB/nm² (C2)
N134 - 8.23wt%SiO2 - 0.3nm SiO2 - 1 CTAB/nm² (C1)
N134 + 1 CTAB/nm² (C8)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9813428 A
- EP 711805 B1
- EP 0799854 A1


### Littérature non-brevet citée dans la description


- *The Journal of the American Chemical Society,* Février 1938, vol. 60, 309
- **A. SCHRODER.** *coll. dans Carbon,* 2002, vol. 40, 207-210